# EUROPÄISCHE PATENTSCHRIFT

(11) **EP 4 099 658 B1**
(45) Veröffentlichungstag und Bekanntmachung des Hinweises auf die Patenterteilung: **30.08.2023**
(21) Anmeldenummer: 21177090.4
(22) Anmeldetag: 01.06.2021
(51) Int. Cl.: H04L 67/12, H04L 51/04, H04L 51/18, A47L 7/00, A47L 9/28

(54) **VERFAHREN ZUM BETRIEB EINES SYSTEMS MIT MINDESTENS ZWEI IDENTISCH AUSGEBILDETEN HAUSHALTSGERÄTEN SOWIE SYSTEM MIT MINDESTENS ZWEI IDENTISCH AUSGEBILDETEN HAUSHALTSGERÄTEN**
METHOD FOR OPERATING A SYSTEM WITH AT LEAST TWO IDENTICALLY DESIGNED DOMESTIC APPLIANCES AND SYSTEM WITH AT LEAST TWO IDENTICALLY DESIGNED DOMESTIC APPLIANCES
PROCÉDÉ DE FONCTIONNEMENT D'UN SYSTÈME POURVU D'AU MOINS DEUX APPAREILS ÉLECTROMÉNAGERS DE CONCEPTION IDENTIQUE, AINSI QUE SYSTÈME POURVU D'AU MOINS DEUX APPAREILS ÉLECTROMÉNAGERS DE CONCEPTION IDENTIQUE

(43) Veröffentlichungstag der Anmeldung: 07.12.2022
(73) Patentinhaber: Vorwerk & Co. Interholding GmbH, 42275 Wuppertal (DE)
(72) Erfinder: Schweppe, Sabine, 40789 Monheim (DE)
(74) Vertreter: Müller, Enno

(56) Entgegenhaltungen:
- EP-A1- 3 706 427
- EP-B1- 3 267 859
- CN-A- 105 116 736

## Beschreibung

### Gebiet der Technik

Die Erfindung betrifft ein Verfahren zum Betrieb eines Systems mit mindestens zwei identisch ausgebildeten Haushaltsgeräten, insbesondere mindestens zwei Bodenbearbeitungsgeräten oder mindestens zwei Küchenmaschinen, wobei ein erstes Haushaltsgerät eine Arbeitstätigkeit mit mindestens einem vordefinierten Arbeitsschritt ausführt, wobei der Arbeitsschritt definiert ist durch einen zur Ausführung des Arbeitsschrittes anzuwendenden Geräteparameter und/oder Ausführungsparameter.

Des Weiteren betrifft die Erfindung ein System mit mindestens zwei identisch ausgebildeten Haushaltsgeräten, welche zur Ausführung eines vorgenannten Verfahrens ausgebildet sind.

### Stand der Technik

Haushaltsgeräte im Sinne der Erfindung können jegliche Arten von Haushaltsgeräten sein, die geeignet sind, eine Datenkommunikation mit einem anderen Haushaltsgerät oder einem externen Endgerät aufzubauen und durchzuführen sowie Arbeitstätigkeiten auszuführen, die mindestens einen vordefinierten Arbeitsschritt beinhalten. Insbesondere sind dies zumindest teilautomatisch arbeitende Haushaltsgeräte, deren vordefinierte Arbeitsschritte gekennzeichnet sind durch zumindest einen festgelegten Geräteparameter und/oder Ausführungsparameter. Ein solches Haushaltsgerät kann insbesondere eine elektromotorisch betriebene Küchenmaschine oder ein Bodenbearbeitungsgerät wie ein Saugreinigungsgerät oder Wischgerät sein.

Eine elektromotorisch betriebene Küchenmaschine im Sinne der Erfindung ist vorteilhaft dazu geeignet, mehrere Arbeitsschritte eines Rezeptes abzuarbeiten, welche beispielsweise bestimmte Geräteparameter, wie Temperatur, Drehzahl und andere, oder bestimmte Ausführungsparameter, wie Heizzeitspanne, Rührzeitspanne oder ähnliches beinhalten. Bezogen auf ein Bodenbearbeitungsgerät kann ein Geräteparameter beispielsweise eine Drehzahl oder Bewegungsfrequenz eines Reinigungselementes oder ein Volumenstrom eines Sauggebläses sein.

Im Stand der Technik ist es darüber hinaus bekannt, einen aktuellen Ist-Zustand des Haushaltsgerätes zu ermitteln, beispielsweise einen aktuellen Energieverbrauch eines elektrischen Verbrauchers des Haushaltsgerätes, eine Temperatur, einen Druck oder ähnliches. Dazu weist das Haushaltsgerät entsprechende Sensoren auf.

Aus der Druckschrift EP 3 267 859 B1 (auch veröffentlicht als US 2018/0070774 A1) ist des Weiteren ein Verfahren zum Betrieb einer elektromotorisch angetriebenen Küchenmaschine bekannt, bei welchem die Küchenmaschine eine Information über ein aktuell zur Zubereitung verwendetes Rezept sowie aktuelle Zustandsparameter und/oder Betriebsparameter an einen zentralen Datenspeicher übermittelt, woraufhin der Zustandsparameter und/oder der Betriebsparameter mit gespeicherten Referenzparametern verglichen wird und im Falle einer Abweichung ein Korrekturvorschlag von dem zentralen Datenspeicher und/oder von einem Mitglied eines Datenkommunikationsnetzwerkes übermittelt wird.

Obwohl im Stand der Technik somit bereits ein Übermitteln eines Korrekturvorschlags durch ein anderes Mitglied oder den zentralen Datenspeicher des Datenkommunikationsnetzwerkes bekannt ist, hat der Nutzer, welcher einen Korrekturvorschlag erhält, keine Information darüber, wie zuverlässig der erhaltene Korrekturvorschlag tatsächlich für seine eigene Situation ist. Insbesondere können den Nutzer Korrekturvorschläge erreichen, welche für seine Situation gar nicht hilfreich sind. Insbesondere ist kein Echtzeitabgleich von Anwendungssituationen vorgesehen, da die aktuellen Zustandsparameter der Küchenmaschine lediglich mit gespeicherten Referenzparametern verglichen werden.

### Zusammenfassung der Erfindung

Ausgehend von dem vorgenannten Stand der Technik ist es daher Aufgabe der Erfindung, eine Hilfestellung für den Nutzer zu optimieren.

Zur Lösung dieser Aufgabe wird vorgeschlagen, dass der aktuell ausgeführte Arbeitsschritt des ersten Haushaltsgerätes mit einem zeitgleich ausgeführten Arbeitsschritt mindestens eines zweiten Haushaltsgerätes verglichen wird, und wobei bei Übereinstimmung des Arbeitsschrittes des ersten Haushaltsgerätes mit dem Arbeitsschritt des zweiten Haushaltsgerätes eine zumindest eine Datenkommunikationsadresse des zweiten Haushaltsgerätes oder eines mit diesem in Kommunikationsverbindung stehenden zweiten externen Endgerätes beinhaltende Kontaktinformation an das erste Haushaltsgerät oder an ein mit dem ersten Haushaltsgerät in Kommunikationsverbindung stehendes erstes externes Endgerät übermittelt wird.

Erfindungsgemäß erfolgt somit vor einer Datenkommunikation zwischen zwei Haushaltsgeräten oder zwei externen Endgeräten, welche jeweils in Kommunikation mit einem der Haushaltsgeräte stehen, eine Überprüfung dahingehend, ob die beiden Haushaltsgeräte tatsächlich zeitgleich identische Arbeitsschritte ausführen. Eine Echtzeit-Unterstützung durch einen anderen Nutzer eines identischen Haushaltsgerätes erfolgt dann nur, wenn dessen Haushaltsgerät zum selben Zeitpunkt eine Arbeitstätigkeit mit zumindest identisch vordefinierten Parametern (Soll-Parameter) vornimmt, wobei die Parameter bei der Ausführung des jeweiligen Arbeitsschrittes anzuwendende Geräteparameter und/oder Ausführungsparameter sind. Die Parameter sind identisch definierte Soll-Parameter, d. h. dass die Steuerungsvorgaben der Haushaltsgeräte identisch sind. Bei der Ausführung des Arbeitsschrittes kann sich in der Praxis jedoch eine Abweichung eines Ist-Parameters von einem Soll-Parameter ergeben. Es können Toleranzbereiche definiert sein, in welchen ein Ist-Parameter noch als "dem Soll-Parameter entsprechend" eingestuft wird. Besonders bevorzugt wird das Verfahren App-gestützt ausgeführt, wobei eine auf dem jeweiligen Haushaltsgerät installierte Applikation zudem von einer entsprechenden Detektionseinrichtung des Haushaltsgerätes ermittelte Ist-Geräteparameter und/oder Ist-Ausführungsparameter sammeln kann, welche dann an eine zentrale Datenverarbeitungseinrichtung, in welcher diese Geräteparameter mit den Parametern (bevorzugt Ist-Parametern) anderer Haushaltsgeräte verglichen werden, übermittelt werden. Es ist somit eine App-gestützte automatische Vernetzung mit anderen Haushaltsgeräten des Systems geschaffen, die zeitgleich eine identische Arbeitstätigkeit ausfüh-In dem Fall, dass die Auswerteeinrichtung des zentralen Servers eine zeitgleiche Ausführung identischer Arbeitsschritte durch mindestens zwei Haushaltsgeräte des Systems erkennt, wird eine Möglichkeit zum Erfahrungsaustausch zwischen den zumindest zwei Nutzern der Haushaltsgeräte ermöglicht. Dadurch kann ein Kontakt zum Erfahrungsaustausch zwischen den Nutzern hergestellt werden. Zumindest wird dafür eine Datenkommunikationsadresse des zweiten Haushaltsgerätes oder eines mit dem zweiten Haushaltsgerät in Kommunikationsverbindung stehenden zweiten externen Endgerätes an das erste Endgerät bzw. das mit diesem verknüpfte externe Endgerät übermittelt. Diese Datenkommunikationsadresse, beispielsweise IP-Adresse, kann das erste Haushaltsgerät bzw. das diesem zugeordnete externe Endgerät nutzen, um eine Kommunikationsverbindung mit entsprechenden Geräten eines anderen Nutzers herzustellen. Das Verfahren ermöglicht somit die Echtzeitunterstützung bei zum Beispiel Fehler- oder Problemfällen während eines Arbeitsschritts. Wenn der Nutzer im Rahmen einer automatischen Arbeitstätigkeit beispielsweise ein bestimmtes Rezept einer Küchenmaschine oder eine bestimmte Reinigungstätigkeit eines Reinigungsgerätes startet, werden diesbezügliche Geräteparameter und/oder Ausführungsparameter des aktuellen Arbeitsschrittes bevorzugt auf einem kommunikationstechnisch verbundenen Server registriert. Eine Serveranwendung kann daraufhin vergleichen, ob es weitere Haushaltsgeräte des Systems gibt, die zeitgleich, d. h. simultan, dieselbe Arbeitstätigkeit mit denselben Geräteparametern und/oder Ausführungsparametern durchführen. Falls es Übereinstimmungen gibt, bietet der Server den Nutzern der Haushaltsgeräte eine gegenseitige Kontaktaufnahme an, die zunächst darin bestehen kann, dass die Datenkommunikationsadresse eines der Nutzer an den anderen Nutzer übermittelt wird. Sofern der jeweilige Nutzer dann einverstanden ist, kann eine Kommunikationsverbindung auf der Basis der übermittelten Datenkommunikationsadresse gestartet werden, damit sich die Nutzer beispielsweise über die Durchführung des Arbeitsschrittes austauschen können.

Insbesondere wird vorgeschlagen, dass die Kontaktinformation noch während der Ausführung des übereinstimmenden Arbeitsschrittes übermittelt wird. Dadurch kann eine Echtzeitunterstützung noch während der Durchführung des verglichenen Arbeitsschrittes erreicht werden, um einen Nutzer insbesondere bei Problemen oder Fragestellungen sofort zu unterstützen. Dadurch hat der Nutzer die Möglichkeit, in den noch laufenden Arbeitsschritt einzugreifen. Es ist dadurch auch insbesondere erreicht, dass die derzeitige Arbeitstätigkeit des Haushaltsgerätes des Nutzers nicht mit Daten zeitlich früher durchgeführter Arbeitstätigkeiten verglichen wird, sondern tatsächlich ein Vergleich mit aktuellen, simultan aufgenommenen, Parametern anderer Haushaltsgeräte erfolgt. Gemäß einer Ausführung kann beispielsweise auch vorgesehen werden, dass nur solche Haushaltsgeräte bzw. Nutzer für eine Datenkommunikation ausgewählt werden, welche sich in derselben Region mit beispielsweise gleichen Umweltparametern befinden. Diese Umweltparameter können beispielsweise eine Tageszeit, Jahreszeit, Temperatur, Umgebungsfeuchtigkeit oder andere sein.

Es ist vorgesehen, dass das erste Haushaltsgerät seinen Gerätetyp, seine Datenkommunikationsadresse und eine Information über den aktuell ausgeführten Arbeitsschritt an eine zentrale Datenverarbeitungseinrichtung übermittelt, welche eine Kommunikationsverbindung sowohl zu dem ersten Haushaltsgerät oder einem mit diesem in Kommunikationsverbindung stehenden ersten externen Endgerät, als auch zu dem zweiten Haushaltsgerät oder einem mit diesem in Kommunikationsverbindung stehenden zweiten externen Endgerät aufweist. Gemäß dieser Ausführung melden sich die Haushaltsgeräte beispielsweise an der zentralen Datenverarbeitungseinrichtung an, indem diese ihre entsprechenden Informationen inklusive der Datenkommunikationsadresse an die zentrale Datenverarbeitungseinrichtung übermitteln und somit dort registriert werden, um an einer Datenkommunikation mit anderen Haushaltsgeräten teilzunehmen. Die übermittelten Daten beinhalten dabei aktuelle Geräteparameter und/oder Ausführungsparameter des aktuell ausgeführten Arbeitsschrittes. Die Übermittlung kann in definierten Zeitabständen oder auch quasi kontinuierlich erfolgen. Auf der zentralen Datenverarbeitungseinrichtung kann dann der erfindungsgemäße Vergleichsschritt erfolgen, um Übereinstimmungen zwischen den Arbeitsschritten mehrerer Haushaltsgeräte zu finden und dementsprechend eine Datenkommunikation zwischen den Haushaltsgeräten bzw. deren Nutzern zu vermitteln. Dies erfolgt wie zuvor erläutert zumindest durch die Übermittlung einer Datenkommunikationsadresse an eines der Haushaltsgeräte bzw. einen der Nutzer. Der Nutzer kann daraufhin selbst entscheiden, ob er eine entsprechende Datenkommunikation eröffnen möchte.

Besonders bevorzugt wird die Kontaktinformation erst dann übermittelt wird, wenn der Nutzer des ersten Haushaltsgerätes und/oder der Nutzer des zweiten Haushaltsgerätes der Übermittlung der Kontaktinformation und/ oder einer Herstellung einer Kommunikationsverbindung zugestimmt hat. Gemäß dieser Ausführung kann somit in besonderem Maße dem Datenschutz entsprochen werden. Der Nutzer entscheidet aktiv, ob er eine Datenkommunikation eröffnen oder eine solche erwidern möchte. Alternativ kann allerdings auch vorgesehen sein, dass der Nutzer eines Haushaltsgerätes durch entsprechende Nutzung des Datenkommunikationsnetzwerkes bzw. Servers des Herstellers der Haushaltsgeräte einer solchen Datenkommunikation bzw. Übermittlung von Kontaktinformationen zustimmt. Die Zustimmung kann der Nutzer in beiden Fällen beispielsweise über eine Bedienfläche seines Haushaltsgerätes oder eine Bedienfläche eines damit verbundenen externen Endgerätes geben. Beispielsweise kann der Nutzer auf einem Display eine Information erhalten, dass ein anderer Nutzer Kontakt zu ihm aufnehmen möchte und dann entsprechend mit Bestätigen oder Ablehnen reagieren. Ebenso kann ein Nutzer gefragt werden, ob er seine Kontaktinformation an einen anderen Nutzer übermitteln möchte.

Gemäß einer besonderen Ausführungsform der Erfindung kann vorgesehen sein, dass ein aktueller Ist-Zustand des ersten Haushaltsgerätes detektiert wird und mittels einer Auswerteeinrichtung, insbesondere einer Auswerteeinrichtung der zentralen Datenverarbeitungseinrichtung, mit einem definierten Referenzzustand verglichen wird. Insbesondere kann vorgesehen sein, dass der aktuell ausgeführte Arbeitsschritt des ersten Haushaltsgerätes nur im Falle einer Abweichung des Ist-Zustands von dem Referenzzustand mit einem zeitgleich ausgeführten Arbeitsschritt eines zweiten Haushaltsgerätes verglichen wird. Diese Vorgehensweise führt dazu, dass die Übermittlung der Datenkommunikationsadresse des zweiten Haushaltsgerätes an das erste Haushaltsgerät bzw. entsprechende Datenübermittlung zwischen zwei korrespondierenden externen Endgeräten nur dann erfolgt, wenn der Ist-Zustand des ersten Haushaltsgerätes keinem definierten Zustand entspricht und somit für den Nutzer des ersten Haushaltsgerätes unter Umständen ein Kommunikationsbedarf zu anderen Nutzern identischer Haushaltsgeräte besteht, um sich über etwaige Gründe oder Korrekturen auszutauschen. Auch der Vergleich des aktuellen Arbeitsschrittes des ersten Haushaltsgerätes mit aktuellen Arbeitsschritten anderer Haushaltsgeräte des Systems erfolgt dementsprechend nur, wenn zuvor eine Abweichung von einem gespeicherten Referenzzustand erkannt wird. Besonders vorteilhaft kann der Nutzer an seinem Haushaltsgerät oder in der auf dem externen Endgerät installierten Applikation auswählen, welchen Arbeitsablauf er wünscht, d. h. ob die Arbeitsdaten seines Haushaltsgerätes stets unmittelbar mit anderen zeitgleich ablaufenden Arbeitsdaten anderer Haushaltsgeräte verglichen werden sollen, um dann die Möglichkeit zu bekommen, andere Nutzer zu kontaktieren, oder ob dies nur dann erfolgen soll, wenn der Ist-Zustand seines Haushaltsgerätes von einem definierten Referenzzustand abweicht. Der aktuelle Ist-Zustand des Haushaltsgerätes kann insbesondere ein Fehlerzustand sein, bezogen auf ein Bodenreinigungsgerät beispielsweise ein übermäßiger Unterdruck in einem Saugkanal oder an einem Saugmund, ein Blockieren eines beweglichen Reinigungselementes, eine über einen Referenzwert hinausgehende von dem Nutzer aufzuwendende Schiebekraft, oder bezogen auf eine Küchenmaschine beispielsweise eine übermäßige Erhitzung eines Bauteils der Küchenmaschine, ein Blockieren eines Rührwerks oder andere. Darüber hinaus kann grundsätzlich bei jeder Art von Haushaltsgeräten auch eine aktuelle Leistungsaufnahme eines elektrischen Verbrauchers mit einer Referenzleistungsaufnahme verglichen werden. Der Nutzer kann dann im Austausch mit anderen Nutzern diskutieren, wie es zu diesem Fehlerzustand gekommen sein kann, wie dieser zukünftig zu vermeiden ist und wie der Nutzer diesen nun aktuell beheben kann. Die für diese Verfahrensführung geeigneten Haushaltsgeräte sind grundsätzlich mit Detektionseinrichtungen ausgestattet, die Betriebsdaten während des Betriebs des Haushaltsgerätes erfassen können. Diese Betriebsdaten werden an eine geeignete Applikation und/oder einen Server übermittelt. Der Server enthält die entsprechenden Referenzdaten für typische Arbeitstätigkeiten und/oder Arbeitsschritte eines definierten Gerätes.

Des Weiteren kann in diesem Zusammenhang vorgesehen sein, dass dem Nutzer des ersten Haushaltsgerätes im Falle einer Abweichung des Ist-Zustands von dem Referenzzustand des Weiteren ein Herstellen einer Kommunikationsverbindung zu einem Servicetechniker oder ein Durchführen einer Unterstützung in Form von zeitlich auf die aktuell ausgeführten Arbeitsschritte des ersten Haushaltsgerätes abgestimmten Echtzeit-Nachrichten an das erste Haushaltsgerät oder ein mit diesem in Kommunikationsverbindung stehendes erstes externes Endgerät angeboten wird. Dies kann beispielsweise auch beinhalten, dass der Nutzer selbst über sein Haushaltsgerät oder sein externes Endgerät eine Anfrage an einen Server des Herstellers sendet, um Informationen bzw. Unterstützung anzufordern. Gemäß einer alternativen Ausführung kann vorgesehen sein, dass der Server selbst einen etwaigen Informations- oder Servicebedarf erkennt und von sich aus eine Nachricht an das Haushaltsgerät bzw. das externe Endgerät sendet, um dem Nutzer eine entsprechende Hilfestellung anzubieten, wenn eine Abweichung festgestellt wird. Insbesondere können aus dem beschriebenen Vergleich des Ist-Zustands des betreffenden Haushaltsgerätes mit in dem Server gespeicherten Referenzzuständen Erkenntnisse über Fehlanwendungen des Nutzers oder Gerätefehler gewonnen werden. Zur Unterstützung stellt der Server dem Nutzer Informationen zur erkannten Situation zur Verfügung und/oder bietet eine Kontaktvermittlung zu einem Servicetechniker an. Der Servicetechniker kann aufgrund der Kenntnis über den aktuell ausgeführten Arbeitsschritt und die Gerätedaten eine Ferndiagnose durchführen und dem Nutzer auf diesem Wege Hilfe und Unterstützung bieten. Des Weiteren kann der Nutzer Hilfestellung in Form von zeitlich auf die aktuell in seinem Haushaltsgerät ausgeführten Arbeitsschritte abgestimmten Echtzeit-Nachrichten erhalten. Dies beinhaltet eine passive Unterstützung des Nutzers durch die Serveranwendung, inklusive beispielsweise hilfreicher Kommentare oder ergänzender Beschreibungen passend zu dem Arbeitsschritt, welchen das Haushaltsgerät des Nutzers aktuell ausführt. Die Kommentar- und Beschreibungsdaten sind vorzugsweise auf dem Server gespeichert und werden zeitlich synchron zu dem aktuellen Arbeitsschritt des Haushaltsgerätes übermittelt.

Des Weiteren kann vorgesehen sein, dass bei der Übermittlung der Kontaktinformation gleichzeitig auch eine Kommunikationsverbindung zwischen dem ersten Haushaltsgerät und dem zweiten Haushaltsgerät oder zwischen dem ersten externen Endgerät und dem zweiten externen Endgerät hergestellt wird. Somit erfolgt nicht nur eine reine Übermittlung der Datenkommunikationsadresse des zweiten Haushaltsgerätes an das erste Haushaltsgerät (bzw. die damit in Kommunikationsverbindung stehenden externen Endgeräte), sondern wird direkt auch eine Kommunikationsverbindung hergestellt. Dies kann beinhalten, dass das zweite Haushaltsgerät bzw. das zweite externe Endgerät unmittelbar eine Nachricht an das erste Haushaltsgerät bzw. das damit verknüpfte externe Endgerät übermittelt und gleichzeitig seine Datenkommunikationsadresse, beispielsweise IP-Adresse, mitteilt. Der Nutzer des ersten Haushaltsgerätes muss somit nicht erst überlegen, wie er an hilfreiche Informationen kommt, insbesondere wie er Kontakt zu anderen Nutzern aufnimmt. Stattdessen erhält er direkt und ohne Weiteres Hilfsangebote anderer Nutzer.

Es kann vorgesehen sein, dass die Kommunikationsverbindung eine Chatverbindung per Text und/oder Bild und/oder Audio und/oder Video beinhaltet. Die Kommunikation zwischen den Nutzern kann dabei beispielsweise als Text auf einem Display des Haushaltsgerätes oder des damit verknüpften externen Endgerätes angezeigt werden. Sofern ein externes Endgerät genutzt wird, können beispielsweise Kurznachrichten in der auf dem externen Endgerät installierten Applikation angezeigt werden. Alternativ können Videosequenzen angezeigt werden, aufgesprochener Text abgespielt werden, Illustrationen zur Fehlerbehebung dargestellt werden und ähnliches. Sofern darüber hinaus eine Kommunikationsverbindung zu einem Servicetechniker besteht, kann dieser Steuerungsdaten an das Haushaltsgerät oder das externe Endgerät übermitteln, welche anschließend von dem Haushaltsgerät für die Ausführung des Arbeitsschrittes verwendet werden können. Dadurch kann insbesondere ein Fehlerzustand behoben werden.

Des Weiteren kann vorgesehen sein, dass für ein Vergleichen des Arbeitsschrittes des ersten Haushaltsgerätes mit dem Arbeitsschritt des zweiten Haushaltsgerätes ein Geräteparameter verglichen wird, welcher ausgewählt ist aus der Gruppe: Temperatur, Drehzahl, Druck, Frequenz, Volumenstrom, Energieverbrauch, und/oder dass für ein Vergleichen des Arbeitsschrittes des ersten Haushaltsgerätes mit dem Arbeitsschritt des zweiten Haushaltsgerätes ein Ausführungsparameter verglichen wird, welcher ausgewählt ist aus der Gruppe: Zeitpunkt, Zeitspanne, Ausführungshäufigkeit. Sofern ein Geräteparameter oder ein Ausführungsparameter des Arbeitsschrittes des ersten Haushaltsgerätes mit einem zeitgleich ablaufenden Arbeitsschritt eines zweiten Haushaltsgerätes übereinstimmt, wird die Datenkommunikationsadresse des zweiten Haushaltsgerätes an das erste Haushaltsgerät übermittelt. Dies entspricht der zuvor beschriebenen Übermittlung von Kontaktdaten an das erste Haushaltsgerät bzw. das damit verknüpfte externe Endgerät, um dem Nutzer des ersten Haushaltsgerätes eine Hilfestellung anzubieten. Die aufgezeigten Geräteparameter bzw. Ausführungsparameter sind lediglich beispielhaft zu verstehen und können je nach der Art des jeweiligen Haushaltsgerätes variieren. Haushaltsgeräte, welche zur Durchführung des erfindungsgemäßen Verfahrens geeignet sind, können beispielsweise Küchengeräte, Reinigungsgeräte, Servicegeräte, Bodenpflegegeräte, Werkzeuge oder andere sein.

Neben dem zuvor beschriebenen Verfahren wird mit der Erfindung des Weiteren auch ein System mit mindestens zwei identisch ausgebildeten Haushaltsgeräten und einer zentralen Datenverarbeitungseinrichtung vorgeschlagen, wobei die Haushaltsgeräte des Systems zur Ausführung eines Verfahrens der vorgenannten Art ausgebildet sind. Zur Vermeidung von Wiederholungen wird hier auf das zuvor beschriebene Verfahren verwiesen. Die zuvor ausgeführten Vorteile und Merkmale gelten entsprechend auch für das erfindungsgemäße System.

### Kurze Beschreibung der Zeichnungen

Im Folgenden wird die Erfindung anhand von Ausführungsbeispielen näher erläutert. Es zeigen:
- Fig. 1: eine erste Nutzerin mit einem ersten Haushaltsgerät;
- Fig. 2: einen zweiten Nutzer mit einem identischen zweiten Haushaltsgerät;
- Fig. 3: einen Teil eines Systems mit einem zentralen Server, einem externen Endgerät und einem Haushaltsgerät;
- Fig. 4: die erste Nutzerin mit dem externen Endgerät bei Empfang einer Kontaktinformation.

### Beschreibung der Ausführungsformen

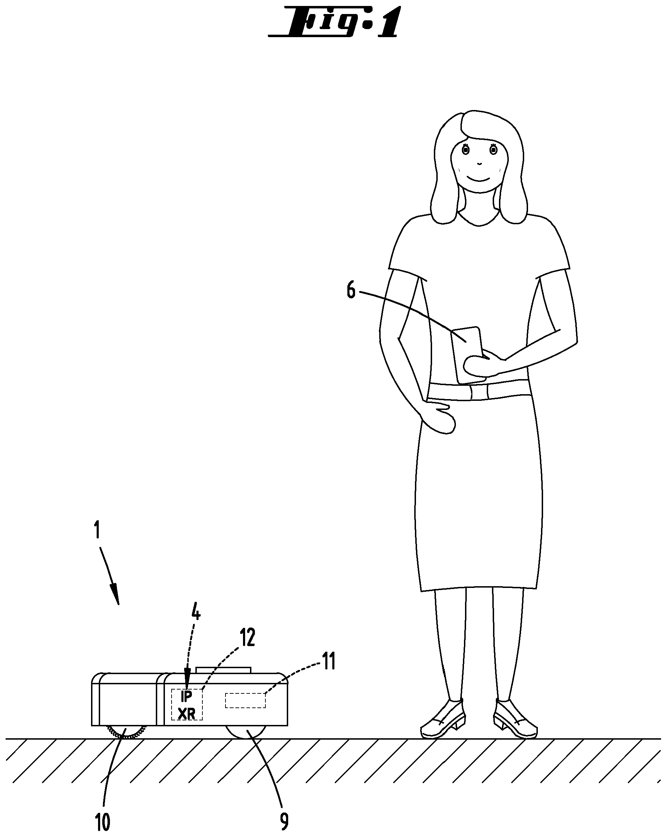

Figur 1 zeigt eine Nutzerin mit einem ersten Haushaltsgerät 1, welches hier beispielsweise als sich selbsttätig fortbewegendes Bodenreinigungsgerät ausgebildet ist. Das Haushaltsgerät 1 verfügt zur selbsttätigen Fortbewegung über eine zu reinigende Fläche über angetriebene Räder 9 sowie zur Bodenbearbeitung über ein Bodenbearbeitungselement 10, welches hier beispielsweise eine um eine im Wesentlichen horizontale Achse rotierende Reinigungsbürste ist. Eine Recheneinrichtung 11 des ersten Haushaltsgerätes 1 dient der Steuerung des Haushaltsgerätes 1 derart, dass sich dieses selbsttätig in der Umgebung fortbewegen kann. Dazu werden von einer nicht weiter dargestellten Detektionseinrichtung aufgenommene Umgebungsdaten vorzugsweise zu einer Umgebungskarte verarbeitet, anhand welcher sich das Haushaltsgerät 1 orientieren kann. Die Recheneinrichtung 11 des Haushaltsgerätes 1 kann darüber hinaus einen Fortbewegungspfad durch die Umgebung planen. Des Weiteren ist die Recheneinrichtung 11 ausgebildet, definierte Bodenbearbeitungstätigkeiten des Haushaltsgerätes 1 zu steuern, beispielsweise eine Saugreinigung einer Bodenfläche unter Einhaltung des vorgeplanten Fortbewegungspfades. Im Rahmen einer Arbeitstätigkeit können ein oder mehrere vordefinierte Arbeitsschritte ausgeführt werden, welche gekennzeichnet sind durch zur Ausführung des Arbeitsschrittes anzuwendende Geräteparameter 3 und/ oder Ausführungsparameter. Geräteparameter 3 in diesem Sinne können beispielsweise eine definierte Drehzahl des Bodenbearbeitungselementes 10 oder ein Volumenstrom eines nicht weiter dargestellten Sauggebläses des Haushaltsgerätes 1 sein. Ein Ausführungsparameter kann beispielsweise der definierte Fortbewegungspfad des Haushaltsgerätes 1 durch die Umgebung, eine vordefinierte Reinigungszeitspanne, eine Wiederholfrequenz der definierten Arbeitstätigkeit, oder anderes sein. Die Recheneinrichtung 11 des Haushaltsgerätes 1 ist des Weiteren eingerichtet, eine Kommunikation mit der Nutzerin des Haushaltsgerätes 1 zu steuern. Dafür kann das Haushaltsgerät 1 mittels einer Kommunikationseinrichtung 12, beispielsweise einem WLAN-Modul oder Bluetooth-Modul, Nachrichten an ein externes Endgerät 6 der Nutzerin übermitteln. Das externe Endgerät 6 ist hier beispielsweise ein Mobiltelefon. Alternativ sind jedoch auch andere Arten von externen Endgeräten 6 denkbar, beispielsweise Tablet-Computer, Laptops, stationäre Recheneinrichtungen oder ähnliche. Des Weiteren kann das Haushaltsgerät 1 auch selbst eine Datenkommunikationsschnittstelle, beispielsweise ein Display, aufweisen, um der Nutzerin Nachrichten anzuzeigen. Die Kommunikationseinrichtung 12 des ersten Haushaltsgerätes 1 verfügt über eine eineindeutige Datenkommunikationsadresse 4, hier beispielsweise "XR".

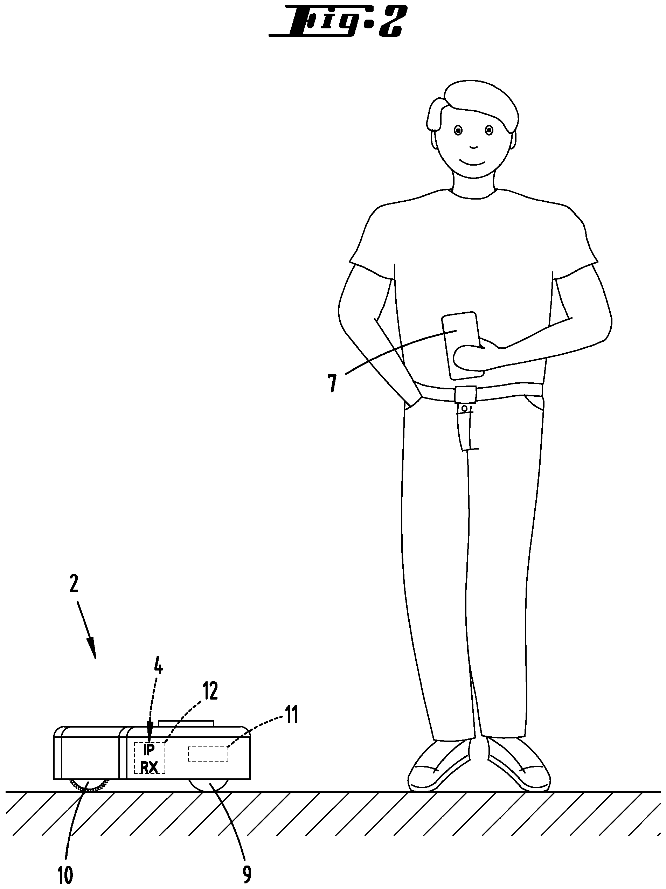

Figur 2 zeigt einen weiteren Nutzer mit einem identisch zu dem Haushaltsgerät 1 der Nutzerin ausgebildeten zweiten Haushaltsgerät 2. Das zweite Haushaltsgerät 2 ist somit ein typgleiches Bodenreinigungsgerät mit einem rotierbaren Bodenbearbeitungselement 10. Auch das zweite Haushaltsgerät 2 verfügt über eine Kommunikationseinrichtung 12, welche über eine individuelle Datenkommunikationsadresse 4 angesprochen werden kann, hier beispielsweise die Datenkommunikationsadresse 4 "IP RX". Auch der zweite Nutzer hat ein externes Endgerät 7, welches in Datenkommunikation mit dem zweiten Haushaltsgerät 2 steht. Wie auch das erste externe Endgerät 6 der Nutzerin kann das zweite externe Endgerät 7 eine Applikation aufweisen, welche zur Steuerung des zweiten Haushaltsgerätes 2 geeignet ist. Insbesondere kann der Nutzer beispielsweise Steuerbefehle an die Recheneinrichtung 11 des zweiten Haushaltsgerätes 2 übermitteln, um eine Arbeitstätigkeit zu definieren, welche einen oder mehrere Arbeitsschritte aufweist, die eine Anwendung bestimmter Geräteparameter 3 und/oder Ausführungsparameter des Haushaltsgerätes 2 beinhalten. Als Geräteparameter 3 kommen hier beispielsweise eine Drehzahl des Bodenbearbeitungselementes 10, ein Volumenstrom eines Sauggebläses, ein Energieverbrauch eines Gebläsemotors oder andere in Frage. Ein Ausführungsparameter kann beispielsweise der definierte Fortbewegungspfad des Haushaltsgerätes 2 durch die Umgebung, eine vordefinierte Reinigungszeitspanne, eine Wiederholfrequenz der definierten Arbeitstätigkeit, oder anderes sein.

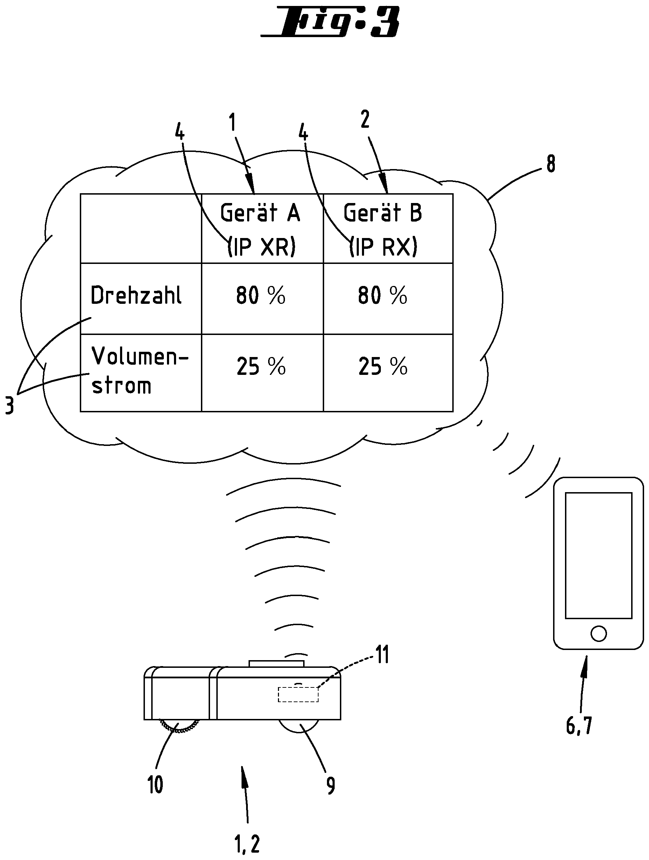

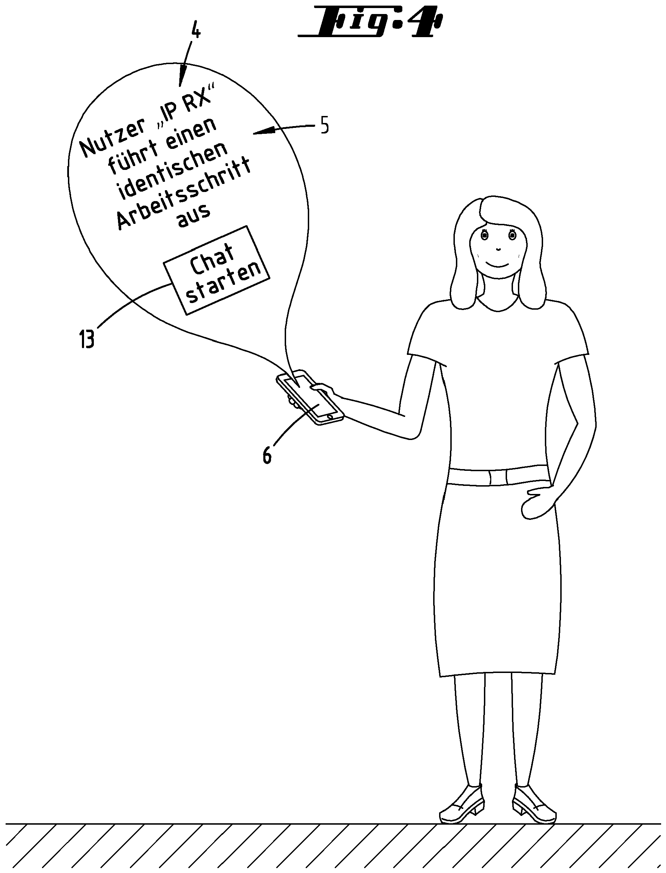

Figur 3 zeigt einen Teil eines erfindungsgemäßen Systems, welches gemäß dem Ausführungsbeispiel sowohl die Haushaltsgeräte 1, 2 der Nutzerin und des Nutzers, als auch deren externe Endgeräte 6, 7 aufweist. In der Figur gemäß Figur 3 ist beispielhaft nur eines der Haushaltsgeräte 1, 2 sowie eines der externen Endgeräte 6, 7 dargestellt. Dies kann wahlweise das Haushaltsgerät 1 der Nutzerin oder das Haushaltsgerät 2 des Nutzers sein bzw. das damit kommunizierende externe Endgerät 6, 7. Das System weist des Weiteren eine externe Datenverarbeitungseinrichtung 8 auf. Die externe Datenverarbeitungseinrichtung 8 ist hier beispielsweise eine sogenannte "Cloud", welche einem Server des Herstellers der Haushaltsgeräte 1, 2 zugehörig ist. Die Haushaltsgeräte 1, 2 sind eingerichtet, über ihre Kommunikationseinrichtungen 12 mit der externen Datenverarbeitungseinrichtung 8 zu kommunizieren, nämlich Daten von der Datenverarbeitungseinrichtung 8 abzurufen bzw. Daten an diese zu übermitteln. Die Daten sind in dem hier dargestellten Ausführungsbeispiel Geräteparameter 3 der Haushaltsgeräte 1, 2, nämlich hier die Drehzahlen der Bodenbearbeitungselemente 10 der Haushaltsgeräte 1, 2 sowie die Volumenströme der Sauggebläse der Haushaltsgeräte 1, 2. Wie in der Figur angedeutet, kann eine Datenkommunikation sowohl zwischen einem Haushaltsgerät 1, 2 und der zentralen Datenverarbeitungseinrichtung 8, als auch zwischen der zentralen Datenverarbeitungseinrichtung 8 und dem externen Endgerät 6, 7 des Nutzers bzw. der Nutzerin bestehen. Gemäß Figur 4 kann dann beispielhaft dargestellt die Nutzerin über ihr externes Endgerät 6 Nachrichten von der zentralen Datenverarbeitungseinrichtung 8 erhalten bzw. an die zentrale Datenverarbeitungseinrichtung 8 übermitteln.

Die Erfindung erfolgt gemäß einer möglichen Ausführungsform nun beispielsweise so, dass die Nutzerin das erste Haushaltsgerät 1 über eine Eingabe auf ihrem externen Endgerät 6 zur Ausführung einer definierten Arbeitstätigkeit steuert, welche einen vordefinierten Arbeitsschritt beinhaltet, hier beispielsweise eine Saugreinigung unter Nutzung des rotierenden Bodenbearbeitungselementes 10 sowie des Sauggebläses des Haushaltsgerätes 1. Der definierte Arbeitsschritt beinhaltet die Anwendung definierter Geräteparameter 3 des ersten Haushaltsgerätes 1. Ein erster Geräteparameter 3 ist gemäß Figur 3 beispielsweise eine Drehzahl von 80 Prozent einer maximal möglichen Drehzahl des Bodenbearbeitungselementes 10 des Haushaltsgerätes 1 (Gerät A). Ein weiterer Geräteparameter 3 ist ein Volumenstrom des Sauggebläses, welcher hier beispielsweise 25 Prozent eines Maximalbetrages entspricht. Nach Drücken eines Startknopfes auf dem externen Endgerät 6 oder bei Erreichen eines vordefinierten Zeitpunktes zur Ausführung der Arbeitstätigkeit startet das Haushaltsgerät 1 seine Fahrt durch die Umgebung und führt dabei den definierten Arbeitsschritt aus. Ebenso übermittelt auch der Nutzer des zweiten Haushaltsgerätes 2 einen Steuerbefehl via des externen Endgerätes 7 an sein Haushaltsgerät 2. Der Nutzer veranlasst hier zufällig zum selben Zeitpunkt eine Arbeitstätigkeit seines Haushaltsgerätes 2, welche der aktuellen Arbeitstätigkeit des Haushaltsgerätes 1 der Nutzerin entspricht. Des Weiteren beinhaltet die Arbeitstätigkeit auch einen zeitgleich gestarteten Arbeitsschritt, welcher mit identisch vordefinierten Geräteparametern 3 der Haushaltsgeräte 1, 2 ausgeführt wird, nämlich hier einer Drehzahl von 80 Prozent eines maximal möglichen Betrages sowie einem Volumenstrom von 25 Prozent eines maximal möglichen Volumenstroms. Da die beiden Haushaltsgeräte 1, 2 identisch ausgebildet sind, sind auch die absoluten Drehzahlen und Volumenströme im Wesentlichen identisch.

Wie in Figur 3 beispielhaft für eines der Haushaltsgeräte 1, 2 dargestellt, übermittelt jedes der Haushaltsgeräte 1, 2 bei Beginn des betreffenden Arbeitsschrittes seine vordefinierten Geräteparameter 3 (Soll-Parameter) an die zentrale Datenverarbeitungseinrichtung 8 des Systems. Alternativ und/oder zusätzlich können auch die aktuellen Ist-Parameter, welche die Detektionseinrichtung des jeweiligen Haushaltsgerätes 1, 2 detektiert, übermittelt werden. Die Datenübermittlung erfolgt unter gleichzeitiger Nennung der jeweiligen Datenkommunikationsadresse 4 des Haushaltsgerätes 1, 2. Dadurch ist die Datenverarbeitungseinrichtung 8 befähigt, die übermittelten Geräteparameter 3 dem jeweiligen Haushaltsgerät 1, 2 des Systems zuzuordnen. Eine auf dem Server installierte Applikation vergleicht nun die von den Haushaltsgeräten 1, 2 aktuell verwendeten Geräteparameter 3 (oder auch nur die vorgegebenen Soll-Geräteparameter 3) und stellt eine Übereinstimmung dieser fest. Erfindungsgemäß informiert die zentrale Datenverarbeitungseinrichtung 8 den Nutzer des Haushaltsgerätes 2 und die Nutzerin des Haushaltsgerätes 1 nun mittels deren externer Endgeräte 6, 7 über den zeitgleich ausgeführten Arbeitsschritt des jeweils anderen Nutzers bzw. Nutzerin. Wie in Figur 4 beispielhaft dargestellt kann die Information eine Nachricht darüber beinhalten, dass der Nutzer einen identischen Arbeitsschritt mit identischen oder identisch vorgegebenen Geräteparametern 3 ausführt sowie eine Anfrage an die Nutzerin, ob diese einen Kommunikationswunsch mit dem Nutzer des Haushaltsgerätes 2 hat. Auf gleiche Art und Weise kann auch auf dem externen Endgerät 7 des Nutzers des Haushaltsgerätes 2 eine entsprechende Information angezeigt werden. Die Information beinhaltet eine Kontaktinformation 5, welche auch die Datenkommunikationsadresse 4 des jeweils anderen Haushaltsgerätes 1, 2 enthält. Die Datenkommunikationsadresse 4 kann derart in der Kontaktinformation 5 enthalten sein, dass eine entsprechende Verlinkung zu dem jeweils anderen externen Endgerät 6, 7 oder dem Haushaltsgerät 1, 2 besteht. Gemäß Figur 4 kann die Nutzerin nun eine Kommunikation mit dem Nutzer des Haushaltsgerätes 2 einleiten, indem diese das angezeigte Betätigungsfeld 13 für einen Kommunikationswunsch auf dem Display des externen Endgerätes 2 betätigt. Sodann wird über die auf dem externen Endgerät 6 installierte Applikation ein Chat mit dem Nutzer des zweiten Haushaltsgerätes 2 gestartet. In diesem Chat können sich die Nutzerin und der Nutzer beispielsweise über eine Anwendungserfahrung mit ihrem Haushaltsgerät 1, 2 austauschen oder auch allgemeine oder spezifische Fragen stellen bzw. beantworten.

Obwohl dies hier nicht separat beschrieben ist, kann der Informationsaustausch zwischen dem Nutzer und der Nutzerin auch auf andere Art und Weise stattfinden. Außer einem Chat in Textform ist beispielsweise auch ein Chat in Audioform, per Bildübermittlung oder auch per Videoübermittlung möglich. Des Weiteren kann die in Figur 3 dargestellte Datenkommunikation von dem Haushaltsgerät 1, 2 an die zentrale Datenverarbeitungseinrichtung 8 auch davon abhängig sein, ob das Haushaltsgerät 1, 2 aktuell eine Fehlersituation erfährt. Dazu kann ein momentaner Zustand (Ist-Zustand) des Haushaltsgerätes 1, 2 zunächst dahingehend überprüft werden, ob dieser mit einem Referenzzustand (bzw. Toleranzbereich) übereinstimmt. Der Referenzzustand kennzeichnet dabei einen optimalen Zustand des Haushaltsgerätes 1, 2 während des aktuell ausgeführten Arbeitsschrittes. Ein optimaler Zustand kann beispielsweise gekennzeichnet sein durch eine bestimmte Leistungsaufnahme eines elektrischen Verbrauchers des Haushaltsgerätes 1, 2, eine erwartete Drehzahl oder einen erwarteten Volumenstrom. Sofern ein Unterschied zwischen dem momentanen Ist-Zustand und dem definierten Referenzzustand besteht, kann die Recheneinrichtung 11 des Haushaltsgerätes 1, 2 seine Geräteparameter 3 (Ist-Geräteparameter und/oder Soll-Parameter) an die zentrale Datenverarbeitungseinrichtung 8 übermitteln, damit die Datenverarbeitungseinrichtung 8 überprüfen kann, ob es derzeit andere Nutzer bzw. Nutzerinnen gibt, die zeitgleich eine identische Arbeitstätigkeit mit identischen Geräteparametern 3 (Ist-Parameter und/oder Soll-Parameter) ausführen. Falls es dann eine Übereinstimmung gibt, kann die zentrale Datenverarbeitungseinrichtung 8 wie zuvor beispielhaft dargestellt eine gegenseitige Kontaktaufnahme anbieten. Gemäß dieser besonderen Ausführung wird die Information über den aktuell ausgeführten Arbeitsschritt des Haushaltsgerätes 1, 2 sowie die damit verbundenen Geräteparameter 3 also erst im Falle eines "Fehlerzustands" an die zentrale Datenverarbeitungseinrichtung 8 übermittelt. Sofern ein Nutzer bzw. eine Nutzerin Schwierigkeiten oder Fragen bei der Ausführung der Arbeitstätigkeit hat, kann er oder sie über die auf seinem externen Endgerät 6, 7 installierte Applikation eine Anfrage an die zentrale Datenverarbeitungseinrichtung 8 übermitteln, mit der um Informationen bzw. Unterstützung bei der Ausführung des Arbeitsschrittes gebeten wird. Die Datenverarbeitungseinrichtung 8 vergleicht dann die übermittelten Informationen mit anderen gespeicherten Informationen anderer Nutzer des Systems und kann eine entsprechende Datenkommunikation vorschlagen oder auch automatisch initialisieren, sofern vorzugsweise beide Nutzer bzw. Nutzerinnen zugestimmt haben.

Des Weiteren kann auch vorgesehen sein, dass die Serverapplikation dem Nutzer bzw. der Nutzerin einen Kontakt zu einem Servicetechniker vermittelt. Auf diese Art und Weise kann dann unterstützend auch eine Ferndiagnose durchgeführt werden.

### Liste der Bezugszeichen

- 1: Haushaltsgerät
- 2: Haushaltsgerät
- 3: Geräteparameter
- 4: Datenkommunikationsadresse
- 5: Kontaktinformation
- 6: Externes Endgerät
- 7: Externes Endgerät
- 8: Datenverarbeitungseinrichtung
- 9: Rad
- 10: Bodenbearbeitungselement
- 11: Recheneinrichtung
- 12: Kommunikationseinrichtung
- 13: Betätigungsfeld

## Patentansprüche

1. Verfahren zum Betrieb eines Systems mit mindestens zwei identisch ausgebildeten Haushaltsgeräten (1, 2), insbesondere mindestens zwei Bodenbearbeitungsgeräten oder mindestens zwei Küchenmaschinen, wobei ein erstes Haushaltsgerät (1) eine Arbeitstätigkeit mit mindestens einem vordefinierten Arbeitsschritt ausführt, wobei der Arbeitsschritt definiert ist durch einen zur Ausführung des Arbeitsschrittes anzuwendenden Geräteparameter (3) und/oder Ausführungsparameter, **dadurch gekennzeichnet, dass** das erste Haushaltsgerät (1) seinen Gerätetyp, seine Datenkommunikationsadresse und eine Information über den aktuell ausgeführten Arbeitsschritt an eine zentrale Datenverarbeitungseinrichtung (8) übermittelt, welche eine Kommunikationsverbindung sowohl zu dem ersten Haushaltsgerät (1) oder einem mit diesem in Kommunikationsverbindung stehenden ersten externen Endgerät (6), als auch zu einem zweiten Haushaltsgerät (2) oder einem mit diesem in Kommunikationsverbindung stehenden zweiten externen Endgerät (7) aufweist, wobei der aktuell ausgeführte Arbeitsschritt des ersten Haushaltsgerätes (1) mit einem zeitgleich ausgeführten Arbeitsschritt des mindestens einen zweiten Haushaltsgerätes (2) verglichen wird, wobei der Vergleich von der zentralen Datenverarbeitungseinrichtung (8) durchgeführt wird, und wobei bei Übereinstimmung des Arbeitsschrittes des ersten Haushaltsgerätes (1) mit dem Arbeitsschritt des zweiten Haushaltsgerätes (2) eine zumindest eine Datenkommunikationsadresse (4) des zweiten Haushaltsgerätes (2) oder eines mit diesem in Kommunikationsverbindung stehenden zweiten externen Endgerätes (7) beinhaltende Kontaktinformation (5) an das erste Haushaltsgerät (1) oder an ein mit dem ersten Haushaltsgerät (1) in Kommunikationsverbindung stehendes erstes externes Endgerät (6) übermittelt wird.

2. Verfahren nach Anspruch 1, **dadurch gekennzeichnet, dass** die Kontaktinformation (5) noch während der Ausführung des übereinstimmenden Arbeitsschrittes übermittelt wird.

3. Verfahren nach einem der vorhergehenden Ansprüche, **dadurch gekennzeichnet, dass** die Kontaktinformation erst dann übermittelt wird, wenn der Nutzer des ersten Haushaltsgerätes (1) und/oder der Nutzer des zweiten Haushaltsgerätes (2) der Übermittlung der Kontaktinformation (5) und/oder einer Herstellung einer Kommunikationsverbindung zugestimmt hat.

4. Verfahren nach einem der vorhergehenden Ansprüche, **dadurch gekennzeichnet, dass** ein aktueller Ist-Zustand des ersten Haushaltsgerätes (1) detektiert wird und mittels einer Auswerteeinrichtung, insbesondere einer Auswerteeinrichtung der zentralen Datenverarbeitungseinrichtung (8), mit einem definierten Referenzzustand verglichen wird, wobei insbesondere vorgesehen ist, dass der aktuell ausgeführte Arbeitsschritt des ersten Haushaltsgerätes (1) nur im Falle einer Abweichung des Ist-Zustands von dem Referenzzustand mit einem zeitgleich ausgeführten Arbeitsschritt eines zweiten Haushaltsgerätes (2) verglichen wird.

5. Verfahren nach Anspruch 4, **dadurch gekennzeichnet, dass** dem Nutzer des ersten Haushaltsgerätes (1) im Falle einer Abweichung des Ist-Zustands von dem Referenzzustand des Weiteren ein Herstellen einer Kommunikationsverbindung zu einem Servicetechniker oder ein Durchführen einer Unterstützung in Form von zeitlich auf die aktuell ausgeführten Arbeitsschritte des ersten Haushaltsgerätes (1) abgestimmten Echtzeit-Nachrichten an das erste Haushaltsgerät (1) oder ein mit diesem in Kommunikationsverbindung stehendes erstes externes Endgerät (6) angeboten wird.

6. Verfahren nach einem der vorhergehenden Ansprüche, **dadurch gekennzeichnet, dass** bei der Übermittlung der Kontaktinformation (5) gleichzeitig auch eine Kommunikationsverbindung zwischen dem ersten Haushaltsgerät (1) und dem zweiten Haushaltsgerät (2) oder zwischen dem ersten externen Endgerät (6) und dem zweiten externen Endgerät (7) hergestellt wird.

7. Verfahren nach Anspruch 6, **dadurch gekennzeichnet, dass** die Kommunikationsverbindung eine Chatverbindung per Text und/oder Bild und/ oder Audio und/oder Video beinhaltet.

8. Verfahren nach einem der vorhergehenden Ansprüche, **dadurch gekennzeichnet, dass** für ein Vergleichen des Arbeitsschrittes des ersten Haushaltsgerätes (1) mit dem Arbeitsschritt des zweiten Haushaltsgerätes (2) ein Geräteparameter (3) verglichen wird, welcher ausgewählt ist aus der Gruppe: Temperatur, Drehzahl, Druck, Frequenz, Volumenstrom, Energieverbrauch, und/oder dass für ein Vergleichen des Arbeitsschrittes des ersten Haushaltsgerätes (1) mit dem Arbeitsschritt des zweiten Haushaltsgerätes (2) ein Ausführungsparameter verglichen wird, welcher ausgewählt ist aus der Gruppe: Zeitpunkt, Zeitspanne, Ausführungshäufigkeit.

9. System mit einer zentralen Datenverarbeitungseinrichtung (8) und mindestens zwei identisch ausgebildeten Haushaltsgeräten (1, 2), welche zur Ausführung eines Verfahrens nach einem der vorhergehenden Ansprüche ausgebildet sind.

## Claims

1. Method for operating a system with at least two identically designed household appliances (1, 2), in particular at least two floor-working appliances or at least two kitchen machines, wherein a first household appliance (1) carries out a working activity with at least one predefined working step, wherein the working step is defined by an appliance parameter (3) and/or execution parameter to be applied for executing the working step, **characterized in that** the first household appliance (1) transmits its appliance type, its data communication address and information about the currently executed working step to a central data processing device (8), which establishes a communication link both to the first household appliance (1) or to a first external terminal (6) which is in communication therewith, and to a second household appliance (2) or a second external terminal (7) which is in communication therewith, wherein the currently executed working step of the first household appliance (1) is compared with a working step of the at least one second household appliance (2) which is executed at the same time, wherein the comparison is carried out by the central data processing device (8), and wherein, if the working step of the first household appliance (1) corresponds to the working step of the second household appliance (2), contact information (5) containing at least one data communication address (4) of the second household appliance (2) or of a second external terminal (7) in communication connection therewith is transmitted to the first household appliance (1) or to a first external terminal (6) in communication connection with the first household appliance (1).

2. Method according to claim 1, **characterized in that** the contact information (5) is transmitted while the matching working step is still being executed.

3. Method according to one of the preceding claims, **characterized in that** the contact information is transmitted only when the user of the first household appliance (1) and/or the user of the second household appliance (2) has consented to the transmission of the contact information (5) and/or to the establishment of a communication link.

4. Method according to one of the preceding claims, **characterized in that** a current actual state of the first household appliance (1) is detected and is compared with a defined reference state by means of an evaluation device, in particular an evaluation device of the central data processing device (8), wherein it is provided in particular that the currently executed working step of the first household appliance (1) is compared with a simultaneously executed working step of a second household appliance (2) only in the case of a deviation of the actual state from the reference state.

5. Method according to claim 4, **characterized in that**, in the event of a deviation of the actual state from the reference state, the user of the first household appliance (1) is furthermore offered the establishment of a communication link to a service technician or the provision of support in the form of real-time messages, which are synchronized with the currently executed working steps of the first household appliance (1), to the first household appliance (1) or to a first external terminal (6) which is in communication therewith.

6. Method according to one of the preceding claims, **characterized in that** when the contact information (5) is transmitted, a communication link is also simultaneously established between the first household appliance (1) and the second household appliance (2) or between the first external terminal (6) and the second external terminal (7).

7. Method according to claim 6, **characterized in that** the communication connection includes a chat connection via text and/or image and/or audio and/or video.

8. Method according to one of the preceding claims, **characterized in that** for comparing the working step of the first household appliance (1) with the working step of the second household appliance (2), an appliance parameter (3) is compared, which is selected from the group:
temperature, rotational speed, pressure, frequency, volume flow, energy consumption, and/or that for comparing the working step of the first household appliance (1) with the working step of the second household appliance (2) an execution parameter is compared, which is selected from the group: time, time span, execution frequency.

9. System comprising a central data processing device (8) and at least two identically designed household appliances (1, 2), which are designed to execute a method according to one of the preceding claims.

## Revendications

1. Procédé d'exploitation d'un système comprenant au moins deux appareils ménagers (1, 2) de conception identique, en particulier au moins deux appareils de traitement du sol ou au moins deux robots ménagers, un premier appareil ménager (1) exécutant une activité de travail avec au moins une étape de travail prédéfinie, l'étape de travail étant définie par un paramètre d'appareil (3) et/ou un paramètre d'exécution à appliquer pour l'exécution de l'étape de travail, **caractérisé en ce que** le premier appareil ménager (1) transmet son type d'appareil, son adresse de communication de données et une information sur l'étape de travail actuellement exécutée à un dispositif central de traitement de données (8), qui établit une liaison de communication aussi bien avec le premier appareil ménager (1) ou un premier terminal externe (6) en liaison de communication avec celui-ci, ainsi qu'à un deuxième appareil ménager (2) ou à un deuxième terminal externe (7) en liaison de communication avec celui-ci, l'étape de travail actuellement exécutée du premier appareil ménager (1) étant comparée à une étape de travail exécutée simultanément par l'au moins un deuxième appareil ménager (2), la comparaison étant effectuée par le dispositif central de traitement de données (8) et, en cas de concordance entre l'étape de travail du premier appareil ménager (1) et l'étape de travail du deuxième appareil ménager (2), une information de contact (5) contenant au moins une adresse de communication de données (4) du deuxième appareil ménager (2) ou d'un deuxième terminal externe (7) en liaison de communication avec celui-ci étant transmise au premier appareil ménager (1) ou à un premier terminal externe (6) en liaison de communication avec le premier appareil ménager (1).

2. Procédé selon la revendication 1, **caractérisé en ce que** l'information de contact (5) est transmise pendant l'exécution de l'étape de travail concordante.

3. Procédé selon l'une des revendications précédentes, **caractérisé en ce que** l'information de contact n'est transmise que lorsque l'utilisateur du premier appareil ménager (1) et/ou l'utilisateur du deuxième appareil ménager (2) a consenti à la transmission de l'information de contact (5) et/ou à l'établissement d'une liaison de communication.

4. Procédé selon l'une des revendications précédentes, **caractérisé en ce qu'**un état réel actuel du premier appareil ménager (1) est détecté et comparé à un état de référence défini au moyen d'un dispositif d'évaluation, en particulier un dispositif d'évaluation du dispositif central de traitement de données (8), dans lequel il est en particulier prévu que l'étape de travail actuellement exécutée du premier appareil ménager (1) n'est comparée à une étape de travail exécutée simultanément par un deuxième appareil ménager (2) que dans le cas d'un écart entre l'état réel et l'état de référence.

5. Procédé selon la revendication 4, **caractérisé en ce qu'**il est en outre proposé à l'utilisateur du premier appareil ménager (1), en cas d'écart entre l'état réel et l'état de référence, d'établir une liaison de communication avec un technicien de service ou d'effectuer une assistance sous la forme de messages en temps réel, adaptés dans le temps aux étapes de travail actuellement exécutées du premier appareil ménager (1), à destination du premier appareil ménager (1) ou d'un premier terminal externe (6) en liaison de communication avec celui-ci.

6. Procédé selon l'une des revendications précédentes, **caractérisé en ce que**, lors de la transmission des informations de contact (5), une liaison de communication est également établie simultanément entre le premier appareil domestique (1) et le deuxième appareil domestique (2) ou entre le premier terminal externe (6) et le deuxième terminal externe (7).

7. Procédé selon la revendication 6, **caractérisé en ce que** la connexion de communication comprend une connexion de chat par texte et/ou image et/ou video ou audio.

8. Procédé selon l'une des revendications précédentes, **caractérisé en ce que**, pour comparer l'étape de travail du premier appareil électroménager (1) à l'étape de travail du deuxième appareil électroménager (2), on compare un paramètre d'appareil (3) choisi dans le groupe : Température, vitesse de rotation, pression, fréquence, débit volumique, consommation d'énergie, et/ou **en ce que**, pour comparer l'étape de travail du premier appareil ménager (1) avec l'étape de travail du deuxième appareil ménager (2), on compare un paramètre d'exécution qui est choisi dans le groupe : moment, durée, fréquence d'exécution.

9. Système comprenant un dispositif central de traitement de données (8) et au moins deux appareils ménagers (1, 2) de conception identique, qui sont conçus pour mettre en oeuvre un procédé selon l'une des revendications précédentes.
